# EUROPEAN PATENT APPLICATION

(11) **EP 3 150 406 A1**
(43) Date of publication of application: **05.04.2017**
(21) Application number: 16189402.7
(22) Date of filing: 19.09.2016
(51) Int. Cl.: B60C 11/03, B60C 11/12

(54) **AUTOMOBILE TIRE**

(30) Priority: 01.10.2015 JP 2015196054
(71) Applicant: Sumitomo Rubber Industries, Ltd., Kobe-shi, Hyogo 651-0072 (JP)
(72) Inventor: WASHIMI, Yuta, Kobe-shi, Hyogo 651-0072 (JP)
(74) Representative: TBK

(57) **Abstract**

An automobile tire that allows wet performance, grip performance, and steering stability to be improved in a well-balanced manner, is provided. An automobile tire includes a tread portion 2 that has: first inclined grooves 3 that extend from a second tread half portion 22 to a first tread ground-contact end TE1 so as to be inclined; and second inclined grooves 4 that extend from a first tread half portion 21 to a second tread ground-contact end TE2 so as to be inclined in a direction opposite to a direction in which the first inclined grooves 3 are inclined, such that the first inclined grooves 3 and the second inclined grooves 4 are alternately provided in the tire circumferential direction. The first tread half portion 21 further includes first sipes 5 that extend outward from end portions 4a of the second inclined grooves 4 along the tire axial direction, and connect with the first inclined grooves 3.

## Description

### BACKGROUND OF THE INVENTION

### Field of the Invention

The present invention relates to automobile tires which are, in particular, used for racing karts and suitable for wet road surfaces.

### Description of the Background Art

To date, various studies have been made for an automobile tire in order to improve wear resistance and wet grip performance in a well-balanced manner. For example, in Japanese Laid-Open Patent Publication No. 2014-177238 (hereinafter, referred to as Patent Literature 1), a tire for racing karts is suggested which has a tread portion in which main inclined grooves each extend from the tire equator to ground-contact ends on both sides, so as to form almost a V-shape, and are provided so as to be spaced in the tire circumferential direction, and paired connection grooves connect the main inclined grooves arranged adjacent to each other in the tire circumferential direction.

However, in the tire for racing karts as disclosed in Patent Literature 1, each main inclined groove continuously extends so as to be V-shaped such that the tire equator is straddled. Therefore, stiffness of the tread portion becomes insufficient near the tire equator, whereby grip performance and steering stability may be affected.

### SUMMARY OF THE INVENTION

The present invention is made in view of the aforementioned situation, and a main object of the present invention is to provide an automobile tire which allows wet performance, grip performance, and steering stability to be improved in a well-balanced manner.

The present invention is directed to an automobile tire that includes a tread portion. The tread portion has: a first tread half portion formed so as to extend from a tire equator to a first tread ground-contact end; and a second tread half portion formed so as to extend from the tire equator to a second tread ground-contact end that is positioned on a side opposite to a side on which the first tread ground-contact end is positioned. The tread portion has: first inclined grooves that extend from end portions in the second tread half portion to the first tread ground-contact end so as to be inclined; and second inclined grooves that extend from end portions in the first tread half portion to the second tread ground-contact end so as to be inclined in a direction opposite to a direction in which the first inclined grooves are inclined, such that the first inclined grooves and the second inclined grooves are alternately provided in a tire circumferential direction. The automobile tire further includes first sipes that extend outward from the end portions of the second inclined grooves along a tire axial direction, and connect with the first inclined grooves.

In the automobile tire according to the present invention, the first sipes preferably terminate without extending through the first inclined grooves.

In the automobile tire according to the present invention, each first inclined groove preferably includes: a first center portion that extends to the first tread half portion such that an angle of the first center portion relative to the tire circumferential direction is gradually reduced from the tire equator; and a first shoulder portion that connects with the first center portion and extends to the first tread ground-contact end such that an angle of the first shoulder portion relative to the tire circumferential direction is gradually increased.

Preferably, the automobile tire according to the present invention further includes second sipes that extend outward from the end portions of the first inclined grooves along the tire axial direction and connect with the second inclined grooves.

In the automobile tire according to the present invention, the second sipes preferably terminate without extending through the second inclined grooves.

In the automobile tire according to the present invention, each second inclined groove preferably includes: a second center portion that extends to the second tread half portion such that an angle of the second center portion relative to the tire circumferential direction is gradually reduced from the tire equator; and a second shoulder portion that connects with the second center portion and extends to the second tread ground-contact end such that an angle of the second shoulder portion relative to the tire circumferential direction is gradually increased.

In the automobile tire according to the present invention, narrow grooves are preferably provided between the first sipes and the second sipes that are adjacent in the tire circumferential direction, and the narrow grooves extend along the tire axial direction.

In the automobile tire according to the present invention, the narrow grooves preferably include first narrow grooves that extend through the first inclined grooves to the first tread ground-contact end.

In the automobile tire according to the present invention, the first narrow grooves preferably include: narrow portions that connect with the first inclined grooves; and wide portions that connect with the first tread ground-contact end and have a groove width greater than the narrow portions.

In the automobile tire according to the present invention, the narrow grooves preferably include second narrow grooves that extend through the second inclined grooves to the second tread ground-contact end.

In the automobile tire according to the present invention, the second narrow grooves preferably include: narrow portions that connect with the second inclined grooves; and wide portions that connect with the second tread ground-contact end and have a groove width greater than the narrow portions.

In the automobile tire of the present invention, the tread portion includes: the first inclined grooves that that extend from the second tread half portion to the first tread ground-contact end; and the second inclined grooves that extend from the first tread half portion to the second tread ground-contact end in a direction opposite to a direction of the first inclined grooves, whereby wet performance becomes excellent. The first inclined grooves and the second inclined grooves are alternately provided in the tire circumferential direction, whereby the first inclined grooves and the second inclined grooves are arranged so as to be dispersed in the tire circumferential direction. Thus, stiffness of the tread portion is enhanced and grip performance and steering stability are improved. Further, by edge effect of the first sipes that extend outward from the end portions of the second inclined grooves along the tire axial direction and connect with the first inclined grooves, traction performance and braking performance on a wet road surface are improved. Further, the first sipes allow stiffness of the first tread half portion to become appropriate, and allow improvement of warning performance of the tire to be exhibited immediately after start of running.

### BRIEF DESCRIPTION OF THE DRAWINGS

FIG. 1 is a development of a tread portion of an automobile tire according to one embodiment of the present invention;
FIG. 2 is an enlarged development of a first tread half portion of the tread portion shown in FIG. 1;
FIG. 3 is an enlarged development of a second tread half portion of the tread portion shown in FIG. 1;
FIG. 4 is a development of a modification of the tread portion shown in FIG. 1;
FIG. 5 is a development of another modification of the tread portion shown in FIG. 1; and
FIG. 6 is a development of still another modification of the tread portion shown in FIG. 1.

### DESCRIPTION OF THE PREFERRED EMBODIMENTS

Hereinafter, an embodiment of the present invention will be described with reference to the drawings.

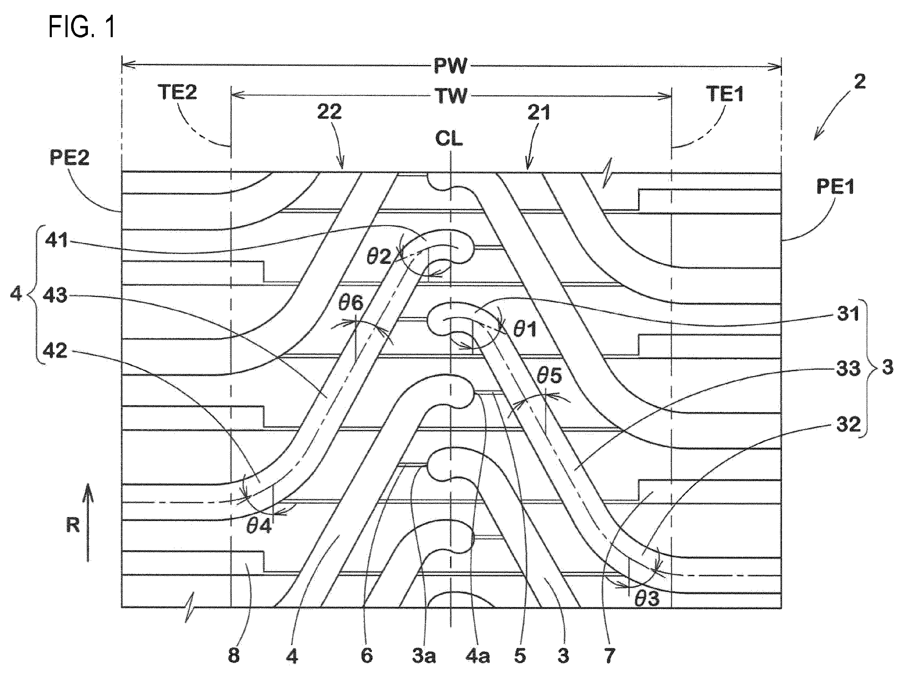

FIG. 1 is a development of a tread portion 2 of an automobile tire (the entirety of which is not illustrated) according to the present embodiment. The automobile tire according to the present invention is advantageously used for racing karts. As shown in FIG. 1, in the automobile tire of the present embodiment, the tread portion 2 has a first tread half portion 21 formed so as to extend from a tire equator CL to a first tread ground-contact end TE1, and a second tread half portion 22 formed so as to extend from the tire equator CL to a second tread ground-contact end TE2 that is a tread ground-contact end on a side opposite to a side on which the first tread ground-contact end TE1 is positioned.

The "tread ground-contact ends" TE1, TE2 are defined as outermost ground contact positions in the tire axial direction in a normally loaded state in which normal load is applied to a tire, in a normal state, which is mounted on a normal rim, to which normal internal pressure is applied, and which is under no load, and the tire is caused to contact with a flat plane at a camber angle of 0°.

The "normal rim" represents a rim that is defined, in a standard system including a standard with which the tire complies, by the standard for each tire, and represent, for example, the "standard rim" in the JATMA standard, the "Design Rim" in the TRA standard, and the "Measuring Rim" in the ETRTO standard.

The "normal internal pressure" represents an air pressure that is defined, in a standard system including a standard with which the tire complies, by the standard for each tire, and represents the "maximum air pressure" in the JATMA standard, the maximum value recited in the table "TIRE LOAD LIMITS AT VARIOUS COLD INFLATION PRESSURES" in the TRA standard, and the "INFLATION PRESSURE" in the ETRTO standard. When the tire is for passenger cars, the normal internal pressure is 180 kPa.

The "normal load" represents a load that is defined, in a standard system including a standard with which the tire complies, by the standard for each tire, and represents the "maximum load ability" in the JATMA standard, the maximum value recited in the table "TIRE LOAD LIMITS AT VARIOUS COLD INFLATION PRESSURES" in the TRA standard, and the "LOAD CAPACITY" in the ETRTO standard. When the tire is for passenger cars, the normal load is a load corresponding to 88% of the above-described load.

For a tire, for racing karts, to be mounted to a front wheel, the "first tread ground-contact end" TE1 and the "second tread ground-contact end" TE2 are each a tread ground-contact end that is measured under conditions that, for example, the tire is mounted on a rim having the rim width of 4.5 inches, the air pressure is 100 kPa, and the applied load is 0.45 kN. For a tire, for racing karts, to be mounted to a rear wheel, the "first tread ground-contact end" TE1 and the "second tread ground-contact end" TE2 are each a tread ground-contact end that is measured under conditions that, for example, the tire is mounted on a rim having a rim width of 6.5 inches, and the air pressure is 100 kPa, and the applied load is 0.65 kN. Hereinafter, in the present invention, the dimensions and the like of components of the tire are represented as values measured in this state, unless otherwise specified. For example, a tread ground-contact width TW is defined as a distance, in the tire axial direction, between the first tread ground-contact end TE1 and the second tread ground-contact end TE2.

The tread portion 2 has first inclined grooves 3 and second inclined grooves 4. The first inclined grooves 3 extend from the second tread half portion 22 to the first tread ground-contact end TE1 so as to be inclined. The second inclined grooves 4 extend from the first tread half portion 21 to the second tread ground-contact end TE2 so as to be inclined in a direction opposite to the direction in which the first inclined grooves 3 are inclined. By the first inclined grooves 3 and the second inclined grooves 4 which are thus formed, the rotating direction R can be specified for the tread portion 2. The first inclined grooves 3 and the second inclined grooves 4 allow drainage performance of the tread portion 2 to be enhanced and allow wet performance to become excellent. From the viewpoint of increased enhancement of cornering performance on a wet road surface, the first inclined grooves 3 and the second inclined grooves 4 are preferably inclined relative to the tire circumferential direction at an angle of 10° to 90°.

The first inclined grooves 3 and the second inclined grooves 4 are alternately provided in the tire circumferential direction. Therefore, the first inclined grooves 3 and the second inclined grooves 4 are arranged so as to be dispersed in the tire circumferential direction. Thus, stiffness of the tread portion 2 is enhanced and grip performance and steering stability are improved. In the present embodiment, each second inclined groove 4 is arranged so as to be shifted relative to each first inclined groove 3 in the tire circumferential direction by the length of 1/2 of a pitch for the first inclined grooves 3. Thus, stiffness of the tread portion 2 is uniformly distributed in the tire circumferential direction, to improve steering stability.

An end portion 3a of each first inclined groove 3 and an end portion 4a of each second inclined groove 4 have rounded corners. Thus, concentration of stress near the end portion 3a and the end portion 4a is reduced. The end portion 3a of the first inclined groove 3 is provided in the second tread half portion 22. The end portion 4a of the second inclined groove 4 is provided in the first tread half portion 21.

For example, the groove width of each first inclined groove 3 is preferably 1% to 25% of the tread ground-contact width TW. When the groove width of the first inclined groove 3 is less than 1% of the tread ground-contact width TW, drainage performance may be degraded. Meanwhile, when the groove width of the first inclined groove 3 is greater than 25% of the tread ground-contact width TW, an actual contact area of the tread portion 2 is reduced, whereby grip performance and wear resistance may be degraded. When the groove width of the first inclined groove 3 is set to be 1% to 25% of the tread ground-contact width TW, drainage performance, grip performance, and wear resistance are improved in a well-balanced manner. The groove width of the first inclined groove 3 is more preferably 8% of the tread ground-contact width TW, for example. For the groove width of each second inclined groove 4, the same groove width as for the first inclined groove 3 is applied.

For example, the depth of each first inclined groove 3 is preferably 55% to 85% of the tread rubber thickness. When the depth of the first inclined groove 3 is less than 55% of the tread rubber thickness, drainage performance may be degraded. Meanwhile, when the depth of the first inclined groove 3 is greater than 85% of the tread rubber thickness, the actual contact area of the tread portion 2 is reduced, whereby grip performance and wear resistance may be degraded. When the depth of the first inclined groove 3 is set to be 55% to 85% of the tread rubber thickness, drainage performance, grip performance, and wear resistance are improved in a well-balanced manner. The depth of the first inclined groove 3 is more preferably 70% of the tread rubber thickness, for example. For the depth of each second inclined groove 4, the same depth as for the first inclined groove 3 is applied.

Each first inclined groove 3 includes a first center portion 31, a first shoulder portion 32, and a first middle portion 33.

The first center portion 31 extends from the second tread half portion 22 to the first tread half portion 21 so as to gradually reduce an angle θ1 relative to the tire circumferential direction. The first shoulder portion 32 connects with the first center portion 31 via the first middle portion 33 and extends to the first tread ground-contact end TE1 so as to gradually increase an angle θ3 relative to the tire circumferential direction. The first middle portion 33 linearly extends at a constant angle θ5 relative to the tire circumferential direction so as to connect between the first center portion 31 and the first shoulder portion 32. The first inclined grooves 3 which are thus formed allow water in a tread surface portion to be smoothly drained according to a slip angle which the automobile tire has during cornering, to improve wet performance.

The angle θ1 of the first center portion 31 is preferably 20° to 110°. When the angle θ1 of the first center portion 31 is less than 20°, the contact area is reduced near the tire equator CL, and wear resistance may be affected. When the angle θ1 of the first center portion 31 is greater than 110°, drainage performance may be affected.

The angle θ3 of the first shoulder portion 32 is preferably 20° to 90°. When the angle θ3 of the first shoulder portion 32 is less than 20°, the tread portion 2 is less likely to be deformed, and contact area is reduced, whereby traction performance or braking performance may be affected. When the angle θ3 of the first shoulder portion 32 is greater than 90°, drainage performance may be affected.

The angle θ5 of the first middle portion 33 is preferably 20° to 30°. When the angle θ5 of the first middle portion 33 is less than 20°, wear resistance may be affected. When the angle θ5 of the first middle portion 33 is greater than 30°, drainage performance may be affected. In these viewpoints, the angle θ5 is particularly preferably 25° to 30°.

Each second inclined groove 4 includes a second center portion 41, a second shoulder portion 42, and a second middle portion 43.

The second center portion 41 extends from the first tread half portion 21 to the second tread half portion 22 so as to gradually reduce an angle θ2 relative to the tire circumferential direction. The second shoulder portion 42 connects with the second center portion 41 via the second middle portion 43 and extends to the second tread ground-contact end TE2 so as to gradually increase an angle θ4 relative to the tire circumferential direction. The second middle portion 43 linearly extends at a constant angle θ6 relative to the tire circumferential direction so as to connect between the second center portion 41 and the second shoulder portion 42. The second inclined grooves 4 which are thus formed allow water in the tread surface portion to be smoothly drained according to a slip angle which the automobile tire has during cornering, to improve wet performance. For the angle θ2 of the second center portion 41, the angle θ4 of the second shoulder portion 42, and the angle θ6 of the second middle portion 43, the same angles as the angle θ1 of the first center portion 31, the angle θ3 of the first shoulder portion 32, and the angle θ5 of the first middle portion 33 are applied.

The tread portion 2 further includes first sipes 5. Each first sipe 5 extends outward from the end portion 4a of the second inclined groove 4 along the tire axial direction, and connects with the first inclined groove 3. By edge effect of the first sipes 5, traction performance and braking performance of the automobile tire on a wet road surface are improved. Further, the first sipes 5 allow stiffness of the first tread half portion 21 to become appropriate, and allow improvement of warming performance of the tire to be exhibited immediately after start of running. The first sipe 5 is closed due to high ground contact pressure near the tire equator CL, whereby stiffness of the tread portion 2 is enhanced near the tire equator CL, and response at steering or the like is improved.

The first sipe 5 terminates without extending through the first inclined groove 3. Thus, stiffness of the tread portion 2 is enhanced in a region outward of the first inclined groove 3 in the tire axial direction, and response at steering, grip performance, and the like are improved.

For example, the groove width of the first sipe 5 is preferably 1% to 5% of the tread ground-contact width TW. When the groove width of the first sipe 5 is less than 1% of the tread ground-contact width TW, drainage performance may be degraded. Meanwhile, when the groove width of the first sipe 5 is greater than 5% of the tread ground-contact width TW, the actual contact area of the tread portion 2 is reduced, and grip performance and wear resistance may be degraded. When the groove width of the first sipe 5 is set to be 1% to 5% of the tread ground-contact width TW, drainage performance, grip performance, and wear resistance are improved in a well-balanced manner. The groove width of the first sipe 5 is more preferably 2% of the tread ground-contact width TW, for example. More specifically, the groove width of the first sipe 5 is preferably 1 mm to 3 mm, for example.

For example, the depth of the first sipe 5 is preferably 20% to 85% of the tread rubber thickness. When the depth of the first sipe 5 is less than 20% of the tread rubber thickness, drainage performance may be degraded. Meanwhile, when the depth of the first sipe 5 is greater than 85% of the tread rubber thickness, stiffness of the tread portion 2 is reduced, and grip performance and wear resistance may be degraded. When the depth of the first sipe 5 is set to be 20% to 85% of the tread rubber thickness, drainage performance, grip performance, and wear resistance are improved in a well-balanced manner. The depth of the first sipe 5 is more preferably 40% of the tread rubber thickness, for example.

For example, an angle of the first sipe 5 relative to the tire axial direction is preferably 0° to 45°. When the angle of the first sipe 5 is less than 0°, drainage performance may be degraded. Meanwhile, when the angle of the first sipe 5 is greater than 45°, stiffness of the first tread half portion 21 in the tire axial direction is reduced near the tire equator CL, and response at steering may be affected. The angle of the first sipe 5 is more preferably 0°, for example.

The tread portion 2 further includes second sipes 6. Each second sipe 6 extends outward from the end portion 3a of the first inclined groove 3 along the tire axial direction, and connects with the second inclined groove 4. By edge effect of the second sipes 6, traction performance and braking performance of the automobile tire on a wet road surface are improved. Further, the second sipes 6 allow stiffness of the second tread half portion 22 to become appropriate, and allow improvement of warming performance of the tire to be exhibited immediately after start of running. The second sipe 6 is closed due to high ground contact pressure near the tire equator CL, whereby stiffness of the tread portion 2 is enhanced near the tire equator CL, and response at steering or the like is improved.

The second sipe 6 terminates without extending through the second inclined groove 4. Thus, stiffness of the tread portion 2 is enhanced in a region outward of the second inclined groove 4 in the tire axial direction, and response at steering, grip performance, and the like are improved.

For the groove width of the second sipe 6, the depth thereof, and the angle thereof relative to the tire axial direction, the same width, depth, and angle as for the first sipe 5 are applied.

Narrow grooves 7 and 8 are provided between the first sipe 5 and the second sipe 6 that are adjacent to each other in the tire circumferential direction so as to extend along the tire axial direction.

By edge effect of the first narrow grooves 7 and the second narrow grooves 8, traction performance and braking performance of the automobile tire on a wet road surface are improved. Further, the first narrow grooves 7 and the second narrow grooves 8 allow stiffness of the tread portion 2 to become appropriate and allow improvement of warming performance of the tire to be exhibited immediately after start of running.

Each first narrow groove 7 extends inward from the first tread ground-contact end TE1 along the tire axial direction and connects with the first inclined groove 3. By the edge effect of the first narrow grooves 7, traction performance and braking performance of the automobile tire on a wet road surface are improved.

In the present embodiment, each first narrow groove 7 extends through the first inclined grooves 3 and 3 arranged adjacent to each other in the tire axial direction. Further, the first narrow groove 7 extends to the second tread half portion 22 and extends through one, of the second inclined grooves 4 and 4 arranged adjacent to each other in the tire axial direction, which is on the inner side in the tire axial direction, and connects with the second inclined groove 4 on the outer side in the tire axial direction. The first narrow grooves 7 which are thus formed exhibit edge effect in a wide region, in the tire axial direction, corresponding to the tread ground-contact width TW, and traction performance and braking performance of the automobile tire on a wet road surface are improved. Further, the first narrow grooves 7 allow stiffness to become appropriate over almost the entirety of the region of the tread portion 2, and allow improvement of warming performance of the tire to be exhibited immediately after start of running.

Each second narrow groove 8 extends inward from the second tread ground-contact end TE2 along the tire axial direction and connects with the second inclined groove 4. By the edge effect of the second narrow grooves 8, traction performance and braking performance of the automobile tire on a wet road surface are improved.

In the present embodiment, each second narrow groove 8 extends through the second inclined grooves 4 and 4 arranged adjacent to each other in the tire axial direction. Further, the second narrow groove 8 extends to the first tread half portion 21 and extends through one, of the first inclined grooves 3 and 3 arranged adjacent to each other in the tire axial direction, which is on the inner side in the tire axial direction, and connects with the first inclined groove 3 on the outer side in the tire axial direction. The second narrow grooves 8 which are thus formed exhibit edge effect in a wide region, in the tire axial direction, corresponding to the tread ground-contact width TW, and traction performance and braking performance of the automobile tire on a wet road surface are improved. Further, the second narrow grooves 8 allow stiffness to become appropriate over almost the entirety of the region of the tread portion 2, and allow improvement of warming performance of the tire to be exhibited immediately after start of running.

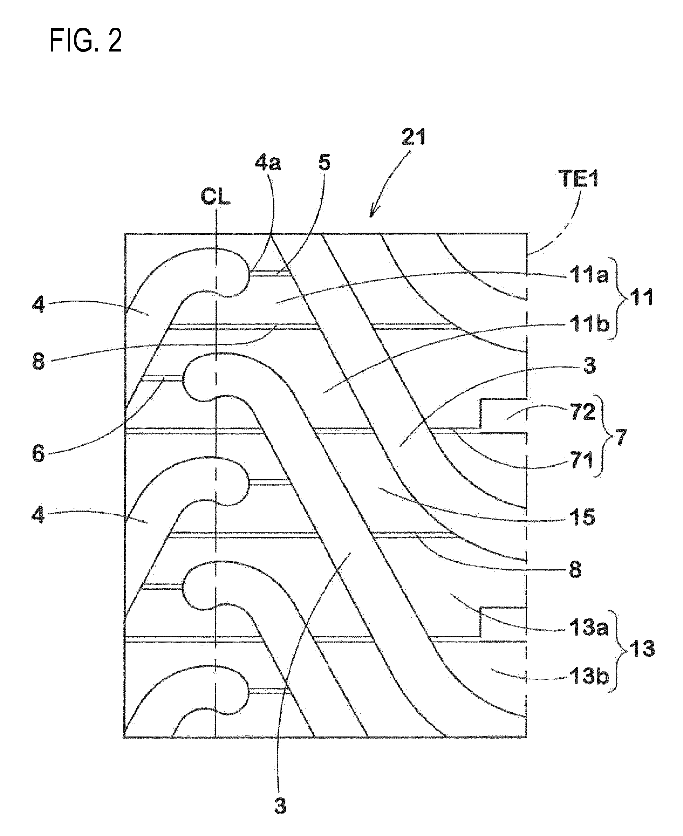

FIG. 2 shows the first tread half portion 21. The first tread half portion 21 includes first center blocks 11, first shoulder blocks 13, and first middle blocks 15.

Each first center block 11 is defined by: the first inclined grooves 3 arranged adjacent to each other in the tire circumferential direction; the second inclined groove 4 arranged adjacent to the first inclined groove 3 in the tire axial direction; the first sipe 5; and the first narrow groove 7. A part of the region of the first center block 11 connects with the second tread half portion 22, and is defined by the second inclined groove 4 and the second sipe 6. The first center block 11 is divided in the tire circumferential direction by the second narrow groove 8 that extends from the second tread half portion 22. That is, the first center block 11 is divided into a leading side block 11a and a trailing side block 11b.

Each first shoulder block 13 is defined by: the first inclined grooves 3 arranged adjacent to each other in the tire circumferential direction; the first tread ground-contact end TE1; and the second narrow groove 8 that extends from the second tread half portion 22. The first shoulder block 13 is divided in the tire circumferential direction by the first narrow groove 7. That is, the first shoulder block 13 is divided into a leading side block 13a and a trailing side block 13b.

Each first middle block 15 is defined by: the first inclined grooves 3 arranged adjacent to each other in the tire circumferential direction; the first narrow groove 7; and the second narrow groove 8 that extends from the second tread half portion 22.

For example, the width of the first middle block 15 in the tire axial direction is preferably 5% to 20% of the tread ground-contact width TW. When the width of the first middle block 15 is less than 5% of the tread ground-contact width TW, stiffness of the first middle block 15 in the tire axial direction becomes insufficient, and grip performance and wear resistance may be degraded. Meanwhile, when the width of the first middle block 15 is greater than 20% of the tread ground-contact width TW, the groove width of the first inclined groove 3 is reduced, and drainage performance is degraded. When the width of the first middle block 15 is set to be 5% to 20% of the tread ground-contact width TW, drainage performance, grip performance, and wear resistance are improved in a well-balanced manner. The width of the first middle block 15 is more preferably 10% of the tread ground-contact width TW, for example.

Each first narrow groove 7 includes a narrow portion 71 and a wide portion 72 having a groove width that is greater than the narrow portion 71. The narrow portion 71 connects with the first inclined grooves 3. The wide portion 72 connects with the first tread ground-contact end TE1. The narrow portion 71 is closed on the leading side of the contact surface, whereby stiffness of the tread portion 2 is enhanced. Meanwhile, the wide portion 72 allows drainage performance to be improved near the first tread ground-contact end TE1.

For example, the groove width of the narrow portion 71 of the first narrow groove 7 is preferably 1% to 5% of the tread ground-contact width TW. When the groove width of the narrow portion 71 is less than 1% of the tread ground-contact width TW, drainage performance may be degraded. Meanwhile, when the groove width of the narrow portion 71 is greater than 5% of the tread ground-contact width TW, the actual contact area of the tread portion 2 is reduced, and grip performance and wear resistance may be degraded. When the groove width of the narrow portion 71 is set to be 1% to 5% of the tread ground-contact width TW, drainage performance, grip performance, and wear resistance are improved in a well-balanced manner. The groove width of the narrow portion 71 is more preferably 2% of the tread ground-contact width TW, for example.

For example, the depth of the narrow portion 71 is preferably 20% to 85% of the tread rubber thickness. When the depth of the narrow portion 71 is less than 20% of the tread rubber thickness, drainage performance may be degraded. Meanwhile, when the depth of the narrow portion 71 is greater than 85% of the tread rubber thickness, stiffness of the tread portion 2 is reduced, and grip performance and wear resistance may be degraded. When the depth of the narrow portion 71 is set to be 20% to 85% of the tread rubber thickness, drainage performance, grip performance, and wear resistance are improved in a well-balanced manner. The depth of the narrow portion 71 is more preferably 40% of the tread rubber thickness, for example.

For example, the angle of the narrow portion 71 relative to the tire axial direction is preferably 0° to 45°. When the angle of the narrow portion 71 is less than 0°, drainage performance may be degraded. Meanwhile, when the angle of the narrow portion 71 is greater than 45°, stiffness of the first tread half portion 21 in the tire axial direction is reduced near the first tread ground-contact end TE1, and cornering performance may be affected. The angle of the narrow portion 71 is more preferably 0°, for example.

For example, the groove width of the wide portion 72 is preferably 1% to 15% of the tread ground-contact width TW. When the groove width of the wide portion 72 is less than 1% of the tread ground-contact width TW, drainage performance may be degraded. Meanwhile, when the groove width of the wide portion 72 is greater than 25% of the tread ground-contact width TW, the first shoulder block 13 is reduced, and grip performance and wear resistance may be degraded. When the groove width of the wide portion 72 is set to be 1% to 15% of the tread ground-contact width TW, drainage performance, grip performance, and wear resistance are improved in a well-balanced manner. The groove width of the wide portion 72 is more preferably 4% of the tread ground-contact width TW, for example.

For example, the depth of the wide portion 72 is preferably 55% to 85% of the tread rubber thickness. When the depth of the wide portion 72 is less than 55% of the tread rubber thickness, drainage performance may be degraded. Meanwhile, when the depth of the wide portion 72 is greater than 85% of the tread rubber thickness, stiffness of the first shoulder block 13 is reduced, and grip performance and wear resistance may be degraded. When the depth of the wide portion 72 is set to be 55% to 85% of the tread rubber thickness, drainage performance, grip performance, and wear resistance are improved in a well-balanced manner. The depth of the wide portion 72 is more preferably 70% of the tread rubber thickness, for example.

For example, the angle of the wide portion 72 relative to the tire axial direction is preferably 0° to 45°. When the angle of the wide portion 72 is less than 0°, drainage performance may be degraded. Meanwhile, when the angle of the wide portion 72 is greater than 45°, an area of the leading side block 13a and an area of the trailing side block 13b become uneven, and wear resistance may be degraded. When the angle of the wide portion 72 is set to be 0° to 45°, drainage performance and wear resistance are improved in a well-balanced manner. The angle of the wide portion 72 is more preferably 0°, for example.

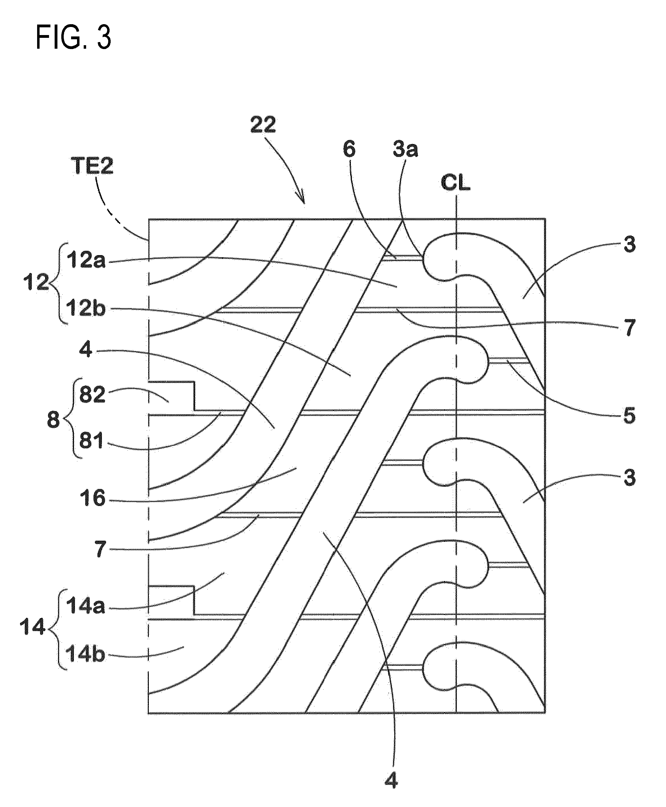

FIG. 3 shows the second tread half portion 22. The second tread half portion 22 includes second center blocks 12, second shoulder blocks 14, and second middle blocks 16.

Each second center block 12 is defined by: the second inclined grooves 4 arranged adjacent to each other in the tire circumferential direction; the first inclined groove 3 arranged adjacent to the second inclined groove 4 in the tire axial direction; the second sipe 6; and the second narrow groove 8. A part of the region of the second center block 12 connects with the first tread half portion 21, and is defined by the first inclined groove 3 and the first sipe 5. The second center block 12 is divided in the tire circumferential direction by the first narrow groove 7 that extends from the first tread half portion 21. That is, the second center block 12 is divided into a leading side block 12a and a trailing side block 12b.

Each second shoulder block 14 is defined by: the second inclined grooves 4 arranged adjacent to each other in the tire circumferential direction; the second tread ground-contact end TE2; and the first narrow groove 7 that extends from the first tread half portion 21. The second shoulder block 14 is divided in the tire circumferential direction by the second narrow groove 8. That is, the second shoulder block 14 is divided into a leading side block 14a and a trailing side block 14b.

Each second middle block 16 is defined by: the second inclined grooves 4 arranged adjacent to each other in the tire circumferential direction; the second narrow groove 8; and the first narrow groove 7 that extends from the first tread half portion 21. For the width of the second middle block 16 in the tire axial direction, the same width as for the first middle block 15 is applied.

Each second narrow groove 8 includes a narrow portion 81 and a wide portion 82 having a groove width which is greater than the narrow portion 81. The narrow portion 81 connects with the second inclined grooves 4. The wide portion 82 connects with the second tread ground-contact end TE2. The narrow portion 81 is closed on the leading side of the contact surface, whereby stiffness of the tread portion 2 is enhanced. Meanwhile, the wide portion 82 allows drainage performance to be improved near the second tread ground-contact end TE2.

For the groove width of the narrow portion 81 of the second narrow groove 8, the depth thereof, and the angle thereof, the same width, depth, and angle as for the narrow portion 71 are applied. Also for the groove width of the wide portion 82 of the second narrow groove 8, the depth thereof, and the angle thereof, the same width, depth, and angle as for the wide portion 72 are applied.

As shown in FIG. 1, in the automobile tire of the present embodiment, the tread portion 2 has no circumferential grooves that extend continuously in the tire circumferential direction. In such an automobile tire, stiffness of the tread portion 2 in the tire axial direction is high, and initial response at steering is improved when the tire is mounted to a front wheel, and cornering performance is improved when the tire is mounted to a rear wheel.

Each first inclined groove 3 and each first narrow groove 7 extend outward in the tire axial direction beyond the first tread ground-contact end TE1, and terminate at a first tread end PE1. Meanwhile, each second inclined groove 4 and each second narrow groove 8 extend outward in the tire axial direction beyond the second tread ground-contact end TE2, and terminate at a second tread end PE2. A tread width PW in which a tread pattern is formed is defined as a distance, in the tire axial direction, between the first tread end PE1 and the second tread end PE2.

The end portion 3a of the first inclined groove 3 is preferably disposed in the second tread half portion 22, in a range of positions that are distant from the tire equator CL by the length corresponding to 2% to 10% of the tread width PW. When the range of the positions at which the end portion 3a is disposed is a range of positions that are distant from the tire equator Cl by a length less than 2% of the tread width PW, drainage performance may be degraded near the tire equator CL. Meanwhile, when the range of the positions at which the end portion 3a is disposed is a range of positions that are distant from the tire equator Cl by a length greater than 10% of the tread width PW, damage such as chipping may occur in the first center block 11 and the second center block 12. Further, stiffness of the tread portion 2 is reduced near the tire equator CL, and grip performance and response at steering may be affected. For the end portion 4a of the second inclined groove 4, the same range as for the end portion 3a is applied.

The end potion 3a of the first inclined groove 3 is preferably disposed in the second tread half portion 22, in a range of positions that are distant from the tire equator CL by the length corresponding to 2% to 10% of the tread width PW. When the range of the positions at which the end potion 3a is disposed is a range of positions that are distant from the tire equator CL by a length less than 2% of the tread width PW, stiffness of the tread portion 2 is reduced near the tire equator CL, and grip performance or response at steering may be affected. Meanwhile, when the range of the positions at which the end potion 3a is disposed is a range of positions that are distant from the tire equator CL by a length greater than 10% of the tread width PW, drainage performance may be degraded near the tire equator CL. For the end potion 4a of the second inclined groove 4, the same range as for the end potion 3a is applied.

The groove width of the first center portion 31 is preferably 5% to 12% of the tread width PW. When the groove width of the first center portion 31 is less than 5% of the tread width PW, drainage performance may be degraded near the tire equator CL. Meanwhile, when the groove width of the first center portion 31 is greater than 12% of the tread width PW, the actual contact area of the tread portion 2 is reduced near the tire equator CL, and grip performance and wear resistance may be degraded. For the groove width of the second center portion 41, the same groove width as for the first center portion 31 is applied.

The groove width of the first shoulder portion 32 is preferably 5% to 15% of the tread width PW. When the groove width of the first shoulder portion 32 is less than 5% of the tread width PW, drainage performance may be degraded near the first tread ground-contact end TE1. Meanwhile, when the groove width of the first shoulder portion 32 is greater than 15% of the tread width PW, the actual contact area of the tread portion 2 is reduced near the first tread ground-contact end TE1, and grip performance and wear resistance may be degraded. For the groove width of the second shoulder portion 42, the same groove width as for the first shoulder portion 32 is applied.

The groove width of the first middle portion 33 is preferably 5% to 12% of the tread width PW. When the groove width of the first middle portion 33 is less than 5% of the tread width PW, drainage performance of the first tread half portion 21 may be degraded. Meanwhile, when the groove width of the first middle portion 33 is greater than 12% of the tread width PW, the actual contact area of the first tread half portion 21 is reduced, and grip performance and wear resistance may be degraded. For the groove width of the second middle portion 43, the same groove width as for the first middle portion 33 is applied.

The length of the first middle portion 33 in the tire axial direction is preferably 5% to 35% of the tread width PW. When the length of the first middle portion 33 is less than 5% of the tread width PW, an edge component of the first inclined groove 3 in the tire axial direction is reduced, and grip performance at cornering may be affected. Meanwhile, when the length of the first middle portion 33 is greater than 35% of the tread width PW, stiffness of the first tread half portion 21 is reduced, and response at steering may be affected. For the length of the second middle portion 43 in the tire axial direction, the same length as for the first middle portion 33 is applied.

As shown in FIG. 1, the number of pitches, in one circumference of the tire, for each of the first inclined grooves 3, the second inclined grooves 4, the first sipes 5, the second sipes 6, the first narrow grooves 7, the second narrow grooves 8, and the like is preferably greater than or equal to 20, more preferably greater than or equal to 21, and preferably not greater than 25, more preferably not greater than 23. Thus, wet performance, grip performance, and steering stability are improved in a well-balanced manner.

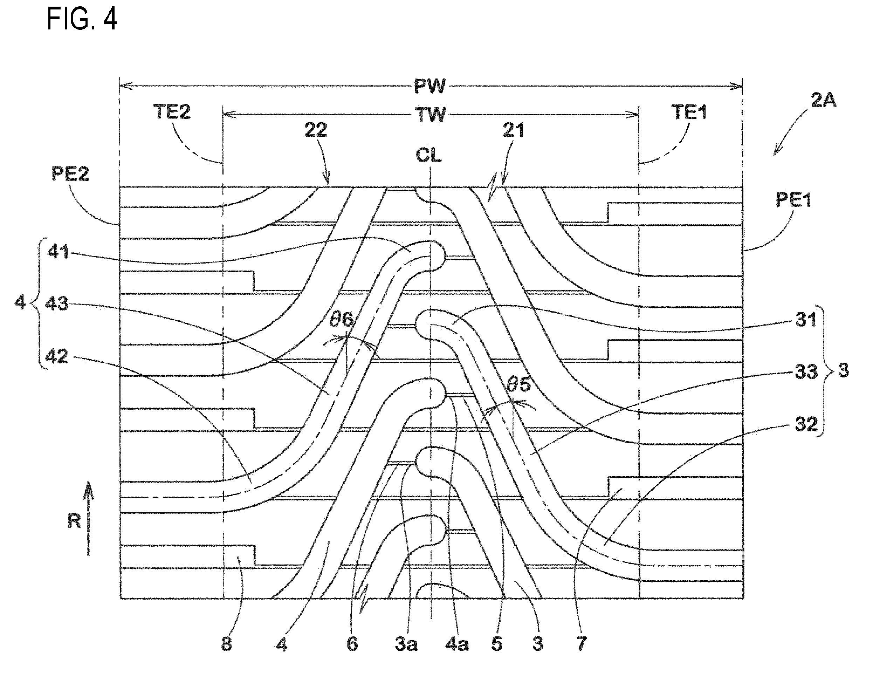

FIG. 4 is a development of a tread portion 2A that is a modification of the tread portion 2 shown in FIG. 1. The components of the tread portion 2A which will not be described below may be the same as for the tread portion 2 described above. The tread portion 2A is different from the tread portion 2 in the shape of each of the first inclined groove 3 and the second inclined groove 4. More specifically, the angle θ5 of the first middle portion 33 and the angle θ6 of the second middle portion 43 are reduced. The first inclined grooves 3 and the second inclined grooves 4 that are thus formed allow improvement of drainage performance of the tread portion 2A.

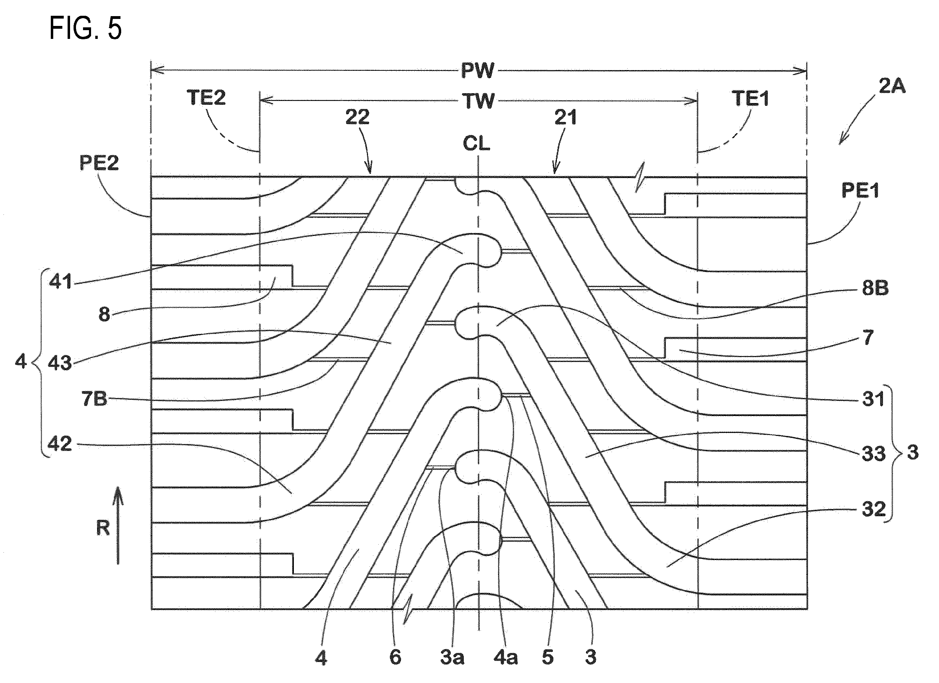

FIG. 5 is a development of a tread portion 2B that is another modification of the tread portion 2 shown in FIG. 1. The components of the tread portion 2B which will not be described below may be the same as for the tread portion 2 and the like as described above. The tread portion 2B is different from the tread portion 2 in the length of each of the first narrow groove 7 and the second narrow groove 8. More specifically, in the tread portion 2B, the first narrow groove 7 terminates without extending through the first inclined groove 3 on the inner side in the tire axial direction, and the second narrow groove 8 terminates without extending through the second inclined groove 4 on the inner side in the tire axial direction. Further, third narrow grooves 8B each of which connects between the first inclined grooves 3 and 3 arranged adjacent to each other in the tire axial direction are each provided on the extension line of the second narrow groove 8, and fourth narrow grooves 7B each of which connects between the second inclined grooves 4 and 4 arranged adjacent to each other in the tire axial direction are each provided on the extension line of the first narrow groove 7. Thus, stiffness of the first center block 11 and the second center block 12 in the tire circumferential direction is enhanced, and traction performance and braking performance are improved.

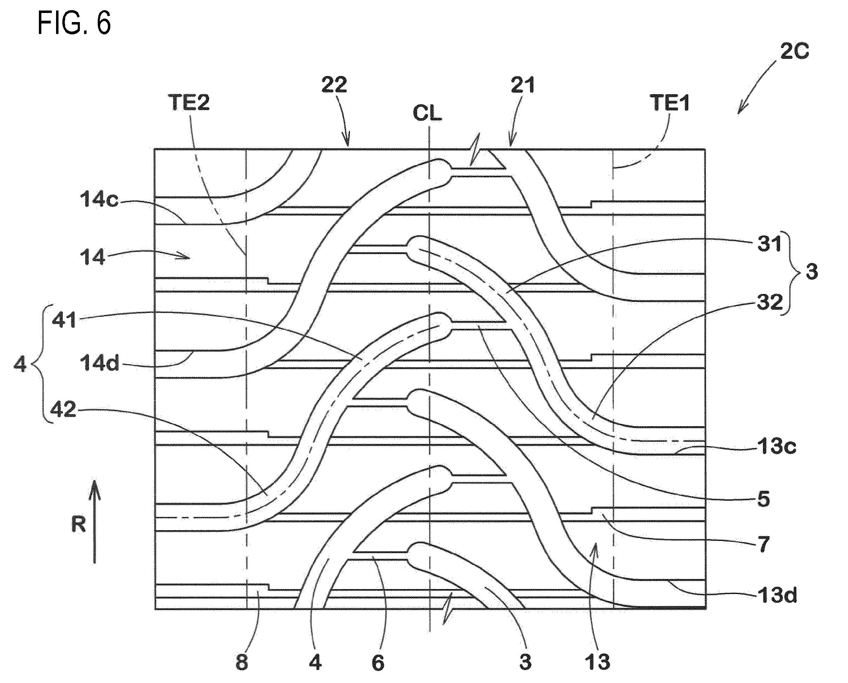

FIG. 6 is a development of a tread portion 2C that is still another modification of the tread portion 2 shown in FIG. 1. The components of the tread portion 2C which will not be described below may be the same as for the tread portion 2 and the like as described above. In the tread portion 2C, the shapes of the first inclined groove 3 and the second inclined groove 4 are changed. More specifically, the first center portion 31 and the first shoulder portion 32 are connected with each other without disposing the first middle portion 33 therebetween, and the second center portion 41 and the second shoulder portion 42 are connected with each other without disposing the second middle portion 43 therebetween. Thus, water near the tire equator CL is quickly drained onto the first tread ground-contact end TE1 and the second tread ground-contact end TE2.

Although the automobile tire of the present invention has been described above in detail, the present invention is not limited to the above specific embodiment, and various modifications can be made.

### [Examples]

Test tires, for racing karts, which had the tread pattern shown in FIG. 1 were produced based on the specifications indicated in Table 1. Under the following conditions, the tires were mounted to all the wheels of a four-wheeled racing kart having an engine displacement of 125 cc, and various performances were tested. The test method was as follows.

### <Front wheel>

Size: 10×4.50-5
Rim: 4.5
Internal pressure: 100 kPa

### <Rear wheel>

Size: 11×6.50-5
Rim: 6.5
Internal pressure: 100 kPa

### <Drainage performance>

The test tires were mounted to all the wheels of a two-stroke cycle four-wheeled racing kart having an engine displacement of 125 cc under the following conditions. By a driver for the test, the racing kart was caused to run on a test course of a wet asphalt road surface which was under water at a depth of 5 mm, and the driver for the test made sensory evaluation for drainage performance at this time. Each result is indicated as a value based on the value of the result of comparative example being 3.0. 5 is the best score. The greater the value is, the better the evaluation is, that is, the better drainage performance is.

### <Wet grip performance>

By a driver for the test, the test vehicle was caused to run on a wet asphalt road surface, and the driver for the test made sensory evaluation for traveling characteristic concerning grip force at this time. Each result is indicated as a value based on the value of the result of comparative example being 3.0. 5 is the best score. The greater the value is, the better the evaluation is, that is, the better grip performance is.

### <Wet steering stability>

By a driver for the test, the test vehicle was caused to run on a wet asphalt road surface, and the driver for the test made sensory evaluation for traveling characteristic concerning steering stability at this time. Each result is indicated as a value based on the value of the result of comparative example being 3.0. 5 is the best score. The greater the value is, the better the evaluation is, that is, the better steering stability is.

### <Warming performance>

By a driver for the test, the test vehicle was caused to run on a wet asphalt road surface, and the driver for the test made sensory evaluation for traveling characteristic concerning warming performance at this time. Each result is indicated as a value based on the value of the result of comparative example being 3.0. 5 is the best score. The greater the value is, the better the evaluation is, that is, the better warming performance is.

### <Wear resistance>

Abrasion wear, which was hangnail-shaped, generated on the surface of the tread portion was observed after the running by a driver for the test. Each result is indicated as a value based on the value of the result of comparative example being 3.0. 5 is the best score. The greater the value is, the better the evaluation is.

### <Overall performance>

The overall performance is represented as an average of values of test results of the drainage performance, the wet grip performance, the wet steering stability, the warming performance, and the wear resistance. The results of the test and the like are indicated in Table 1.

**[Table 1]**

| | Comparative example | Example 1 | Example 2 | Example 3 |
|---|---|---|---|---|
| End of first inclined groove | First tread half portion | Second tread half portion | Second tread half portion | Second tread half portion |
| End of second inclined groove | Second tread half portion | First tread half portion | First tread half portion | First tread half portion |
| First sipe | not provided | provided | provided | provided |
| Second sipe | not provided | provided | provided | provided |
| First center portion | not provided | provided | provided | provided |
| Second center portion | not provided | provided | provided | provided |
| First middle portion | provided | provided | provided | provided |
| Second middle portion | provided | provided | provided | provided |
| First shoulder portion | provided | provided | provided | provided |
| Second shoulder portion | provided | provided | provided | provided |
| First narrow groove | not provided | provided | provided | not provided |
| Second narrow groove | not provided | provided | provided | not provided |
| Wide portion | not provided | provided | not provided | not provided |
| Circumferential groove | provided | not provided | not provided | not provided |
| Drainage performance (5 is the best score) | 3.0 | 4.0 | 3.5 | 3.0 |
| Wet grip performance (5 is the best score) | 3.0 | 5.0 | 5.0 | 4.5 |
| Wet steering stability (5 is the best score) | 3.0 | 5.0 | 5.0 | 5.0 |
| Warming performance (5 is the best score) | 3.0 | 5.0 | 4.5 | 4.0 |
| Wear resistance (5 is the best score) | 3.0 | 5.0 | 5.0 | 5.0 |
| Overall performance (average) | 3.0 | 4.8 | 4.6 | 4.3 |

As is apparent from Table 1, it can be confirmed that performances of each of the automobile tires in examples have significantly improved in a well-balance manner as compared to comparative example.

An automobile tire that allows wet performance, grip performance, and steering stability to be improved in a well-balanced manner, is provided. An automobile tire includes a tread portion 2 that has: first inclined grooves 3 that extend from a second tread half portion 22 to a first tread ground-contact end TE1 so as to be inclined; and second inclined grooves 4 that extend from a first tread half portion 21 to a second tread ground-contact end TE2 so as to be inclined in a direction opposite to a direction in which the first inclined grooves 3 are inclined, such that the first inclined grooves 3 and the second inclined grooves 4 are alternately provided in the tire circumferential direction. The first tread half portion 21 further includes first sipes 5 that extend outward from end portions 4a of the second inclined grooves 4 along the tire axial direction, and connect with the first inclined grooves 3.

## Claims

1. An automobile tire (1) comprising a tread portion (2), wherein
the tread portion (2) has: a first tread half portion (21) formed so as to extend from a tire equator CL to a first tread ground-contact end TE1; and a second tread half portion (22) formed so as to extend from the tire equator CL to a second tread ground-contact end TE2 that is positioned on a side opposite to a side on which the first tread ground-contact end TE1 is positioned, and
the tread portion (2) has: first inclined grooves (3) that extend from end portions (3 a) in the second tread half portion (22) to the first tread ground-contact end TE1 so as to be inclined; and second inclined grooves (4) that extend from end portions (4a) in the first tread half portion (21) to the second tread ground-contact end TE2 so as to be inclined in a direction opposite to a direction in which the first inclined grooves (3) are inclined, such that the first inclined grooves (3) and the second inclined grooves (4) are alternately provided in a tire circumferential direction, the automobile tire (1) further comprising
first sipes (5) that extend outward from the end portions (4a) of the second inclined grooves (4) along a tire axial direction, and connect with the first inclined grooves (3).

2. The automobile tire (1) according to claim 1, wherein the first sipes (5) terminate without extending through the first inclined grooves (3).

3. The automobile tire (1) according to claim 1 or 2, wherein each first inclined groove (3) includes: a first center portion (31) that extends to the first tread half portion (21) such that an angle of the first center portion (31) relative to the tire circumferential direction is gradually reduced from the tire equator CL; and a first shoulder portion (32) that connects with the first center portion (31) and extends to the first tread ground-contact end TE1 such that an angle of the first shoulder portion (32) relative to the tire circumferential direction is gradually increased.

4. The automobile tire (1) according to any one of claims 1 to 3, further comprising second sipes (6) that extend outward from the end portions (3a) of the first inclined grooves (3) along the tire axial direction and connect with the second inclined grooves (4).

5. The automobile tire (1) according to claim 4, wherein the second sipes (6) terminate without extending through the second inclined grooves (4).

6. The automobile tire (1) according to claim 4 or 5, wherein each second inclined groove (4) includes: a second center portion (41) that extends to the second tread half portion (22) such that an angle of the second center portion (41) relative to the tire circumferential direction is gradually reduced from the tire equator CL; and a second shoulder portion (42) that connects with the second center portion (41) and extends to the second tread ground-contact end TE2 such that an angle of the second shoulder portion (42) relative to the tire circumferential direction is gradually increased.

7. The automobile tire (1) according to any one of claims 4 to 6, wherein narrow grooves are provided between the first sipes (5) and the second sipes (6) that are adjacent in the tire circumferential direction, and the narrow grooves extend along the tire axial direction.

8. The automobile tire (1) according to claim 7, wherein the narrow grooves include first narrow grooves (7) that extend through the first inclined grooves (3) to the first tread ground-contact end TE1.

9. The automobile tire (1) according to claim 8, wherein the first narrow grooves (7) include: narrow portions (71) that connect with the first inclined grooves (3); and wide portions (72) that connect with the first tread ground-contact end TE1 and have a groove width greater than the narrow portions (71).

10. The automobile tire (1) according to any one of claims 7 to 9, wherein the narrow grooves include second narrow grooves (8) that extend through the second inclined grooves (4) to the second tread ground-contact end TE2.

11. The automobile tire (1) according to claim 10, wherein the second narrow grooves (8) include: narrow portions (81) that connect with the second inclined grooves (4); and wide portions (82) that connect with the second tread ground-contact end TE2 and have a groove width greater than the narrow portions (81).
